# EUROPEAN PATENT APPLICATION

(11) **EP 4 431 187 A1**
(43) Date of publication of application: **18.09.2024**
(21) Application number: 23162722.5
(22) Date of filing: 17.03.2023
(51) Int. Cl.: B01L 3/02, B01L 3/00, F15B 3/00

(54) **PNEUMATIC CIRCUIT**

(71) Applicant: FAS MEDIC S.A., 1607 Palézieux (CH)
(72) Inventor: JUNOD, Florent, 1247 Anières (CH)
(74) Representative: Edson, Russell Gregory

(57) **Abstract**

The present disclosure relates to a pneumatic circuit for a pneumatic drive apparatus comprising a pump, a fluid distribution conduit, a plurality of reservoirs and a plurality of actuation ports. A first input valve is provided between an outlet of the pump and the fluid distribution conduit. A second input valve is provided between an inlet of the pump and the fluid distribution conduit. A plurality of flow paths extend from the fluid distribution conduit to each of the plurality of actuation ports. Each flow path is associated with a respective reservoir and a corresponding valve arrangement which is controllably moveable between a first configuration, in which the associated reservoir is in fluid communication with the fluid distribution conduit, so as to enable the reservoir to be charged with a pressure from the fluid distribution conduit, and a second configuration, in which the associated reservoir is in fluid communication with the respective actuation port.

## Description

### Field of the invention

The present disclosure relates to a micro-fluidic pneumatic circuit for a micro-fluidic pneumatic drive apparatus for use in fluid aspiration and dispensing applications, and a manifold for such a micro-fluidic pneumatic drive apparatus.

### Background of the invention

Micro-fluidic pneumatic circuits are used in a variety of different applications, for controlling systems which dispense and aspirate various kinds of fluid. In the present context, micro-fluidic applications mean those in which the pipetting apparatus is used for aspirating or dispensing doses in the range of one microlitre to several millilitres.

Solutions exist in which positive and negative pressures and flows can be controlled in a pneumatic circuit, in order to control the aspiration and dispensing of fluids through pipetting heads, to aspirate and dispense fluids.

Depending upon the fluid circuitry used, drawbacks associated with known systems include difficulties in providing accurate and repeatable dispensing pressures and volumes, and the range of components required to implement sufficiently flexible and accurate control systems can result in undesirable levels of cost and complexity.

It is an aim of the present disclosure to provide a pneumatic circuit which addresses drawbacks in the prior art.

### Summary of the invention

A first aspect of the invention provides a pneumatic circuit for a pneumatic drive apparatus having any or all of the following features:
a pump;
a fluid distribution conduit;
a plurality of reservoirs;
a plurality of actuation ports;
a first input valve operable to selectively provide a fluid connection between an outlet of the pump and the fluid distribution conduit;
a second input valve operable to selectively provide a fluid connection between an inlet of the pump and the fluid distribution conduit; and
a plurality of flow paths, each flow path extending from the fluid distribution conduit to a respective one of the plurality of actuation ports;
wherein each flow path is associated with a respective one of the plurality of reservoirs and a corresponding valve arrangement; and
wherein each valve arrangement is controllably moveable between a first configuration, in which the associated reservoir is in fluid communication with the fluid distribution conduit, so as to enable the reservoir to be charged with a pressure from the fluid distribution conduit, and a second configuration, in which the associated reservoir is in fluid communication with the respective actuation port.

Advantageously, in the pneumatic circuit according to the present disclosure each actuation port is fluidly connected to its own individual reservoir, which can be pre-charged with desired pressure from the fluid distribution conduit, rather than being directly connected to the fluid distribution conduit. As such, the pneumatic circuit according to the present disclosure is better able to resist fluctuations in the pressure supplied to each actuation port when multiple valves are opened at the same time. The pump may be a pneumatic pump and/or may form a single pressure source for the circuit.

The pneumatic circuit may be a micro-fluidic pneumatic circuit. One or more of the valves in the pneumatic circuit may be micro-fluidic valves. In this respect, the pneumatic circuit may be configured to dispense doses with microlitre precision. The pneumatic circuit may be configured to dispense doses smaller than 1 millilitre, preferably smaller than 100 microliters, preferably smaller than 10 microlitres, preferably smaller than 5 microlitres, preferably smaller than 2 microlitres.

In some embodiments, the first and second input valves are controllably moveable between a first configuration, in which the pump applies a positive pressure to the fluid distribution conduit, and a second configuration, in which the pump applies a negative pressure to the fluid distribution conduit.

Advantageously, this configuration allows a single pump to be used to supply both a positive and a negative pressure to the fluid distribution conduit.

In some embodiments, the pneumatic circuit comprises at least three flow paths extending from the fluid distribution conduit.

In some embodiments, the pneumatic circuit comprises at least five flow paths extending from the fluid distribution conduit.
In some embodiments, the pneumatic circuit comprises at least seven flow paths extending from the fluid distribution conduit.

In some embodiments, each valve arrangement comprises a pair of valves, the first valve is a 2/2 valve having first port in fluid communication with the fluid distribution conduit and a second port in fluid communication with the associated reservoir, and the second valve is a 2/2 valve having a first port in fluid communication with the associated reservoir and a second port in fluid communication with the associated actuation port.

Advantageously, when the valve arrangement is provided as a pair of 2/2 valves, it is possible to store a "charged" pressure within the reservoirs without having to immediately transfer said pressure to the associated actuation port. This results in a more "controllable" pneumatic circuit.

In some embodiments, each valve arrangement comprises a single 3/2 valve having a first port in fluid communication with the fluid distribution conduit, a second port in fluid communication with the associated reservoir and a third port in fluid communication with the associated actuation port.

Advantageously, providing the valve arrangement as a single 3/2 valve results in a more compact pneumatic circuit.

A second aspect of the invention provides an arrangement having any or all of the following features:
A manifold for a pneumatic drive apparatus comprising:
a fluid distribution conduit;
a plurality of actuation ports;
an inlet for providing a fluid connection between the fluid distribution conduit and a first input valve;
an outlet for providing a fluid connection between the fluid distribution conduit a second input valve; and
a plurality of flow paths, wherein each flow path extends from the fluid distribution conduit to a respective one of the plurality of actuation ports; and
wherein each flow path is associated with a respective one of the plurality of reservoirs.

In some embodiments, the manifold comprises at least three flow paths extending from the fluid distribution conduit.

In some embodiments, the manifold comprises at least five flow paths extending from the fluid distribution conduit.

In some embodiments, the manifold comprises at least seven flow paths extending from the fluid distribution conduit.

In some embodiments, each flow path may extends along a tortuous path between the fluid distribution conduit and its respective actuation port.

In some embodiments, each flow path comprises a plurality of sections, and each of said sections comprise a valve port provided at an external surface of the manifold for connection to a corresponding valve arrangement.

In some embodiments, the manifold comprises a body, and each reservoir is integrally formed within the body of the manifold.

In some embodiments, the manifold is provided as a single unitary block.

In some embodiments, the associated reservoir for each flow path is provided proximal to a surface which is located opposite to the surface in which the valve ports are provided.

In some embodiments, each reservoir comprises a longitudinal axis, and the longitudinal axis of each reservoir is substantially perpendicular to a longitudinal axis of the fluid distribution conduit.

In some embodiments, each flow path comprises a plurality of sections, each section has a longitudinal axis, and each flow path is arranged such that the longitudinal axes of the plurality of sections are substantially perpendicular to the longitudinal axis of the reservoir associated with the flow path.

In some embodiments, the manifold comprises at least one channel having a first opening provided in a first surface of the manifold for providing a fluid connection with an inlet or an outlet of a pump.

In some embodiments, the manifold comprises a second opening provided in a second surface of the manifold for providing fluid connection with a first or second input valve.

In some embodiments, the first surface and the second surface have different orientations.

In some embodiments, the first surface is orientated perpendicularly to the second surface.

In some embodiments, the manifold may comprise a plurality of external surfaces.

In some embodiments, the plurality of external surfaces may comprise a first external surface and a second external surface opposite the first external surface.

In some embodiment, the plurality of actuation ports may be arranged opening out of the second external surface to a first side of an axis of the fluid distribution conduit.

In some embodiments, the fluid distribution conduit may be substantially linear.

In some embodiments, one or more openings may be provided for fluidly connecting one or more input and/or output valves to the fluid distribution conduit.

In some embodiments, the one or more openings may be provided on a different external surface to the first surface of the manifold.

In some embodiments, the one or more openings may be provided on the first external surface.

In some embodiments, an inlet opening and/or an outlet opening may be provided to the manifold.

In some embodiments, the inlet opening and/or the outlet opening may be provided on a different surface of the manifold from first or second surfaces.

In some embodiments, the manifold may be configured to receive a plurality of output devices (e.g., pipette tips) on a same side as the second surface.

In some embodiments, the manifold may be configured to receive one or more valves mounted to an external surface of the manifold.

In some embodiments, the valves to be mounted to the first surface may be for controlling fluid flow between the inlet and/or the outlet opening and the fluid distribution conduit.

In some embodiments, fluid paths may be provided within the manifold extending between the first surface and the fluid conduit such that one or more valves mounted to the first surface can control fluid flow between one or more inlet and/or outlet ports of the manifold and the fluid distribution conduit.

In some embodiments, the one or more inlet and/or outlet ports may be provided on different surfaces of the manifold to the ports for the valves.

In some embodiment, the manifold may comprise one or more reservoirs provided to a first side of the fluid distribution conduit.

In some embodiment, the manifold may further comprise one or more valve ports, for connection to a valve arrangement, disposed on a surface of the manifold.

In some embodiments, the one or more valve ports may be disposed to the opposite side of the fluid distribution conduit.

In some embodiments, the one or more valve ports may be arranged in quincunx.

In some embodiments, the surface may be on a side of the fluid distribution conduit opposite to the one or more reservoirs.

In some embodiments, the valve arrangement arranged to the opposite side of the distribution conduit may be for controlling a fluid flow between the fluid distribution conduit and the one or more reservoirs.

In some embodiments, each reservoir may be associated with a respective valve arrangement.

In some embodiments, each valve arrangement may be arranged to an opposite side of the fluid distribution conduit to its respective reservoir.

In some embodiments, the fluid distribution conduit may extend longitudinally between a plurality of reservoirs and a plurality of valve arrangements for controlling fluid flow between the respective reservoirs and the fluid distribution conduit.

In some embodiments, the manifold may be arranged such that a first array of one or more reservoirs is arranged to a first side of the fluid distribution conduit and a second array of one or more reservoirs is arranged to a second side of the fluid distribution conduit opposite the first side.

In some embodiments, the manifold may further be configured such that a first array of one or more valve arrangements, for control of flow between the fluid distribution conduit and the first array of one or more reservoirs, can be arranged to the second side of the fluid distribution conduit, and such that a second array of one or more valve arrangements, for control of flow between the fluid distribution conduit in the second array of one or more reservoirs, can be arranged to the first side of the fluid distribution conduit, by providing suitable ports and flow paths for connection to such valves.

### Brief description of the drawings

Embodiments of the invention will now be described with reference to the accompanying drawings, in which:
Figure 1 is a schematic diagram illustrating a pneumatic circuit according to one aspect of the present disclosure;
Figure 2 is a schematic diagram illustrating a pneumatic circuit according to another aspect of the present disclosure;
Figure 3 is a front view of a pneumatic drive apparatus according to one aspect of the present disclosure;
Figure 4 is a side view of the pneumatic drive apparatus illustrated in Figure 3;
Figure 5 is a perspective view of the pneumatic drive apparatus illustrated in Figures 3 and 4;
Figure 6 is a front view of a pneumatic drive apparatus according to another aspect of the present disclosure;
Figure 7 is a side view of the pneumatic drive apparatus illustrated in Figure 6; and Figure 8 is a perspective view of the pneumatic drive apparatus illustrated in Figures 6 and 7.

### Detailed description

The present disclosure relates to microfluidic devices and related components. In the present context, micro-fluidic applications mean those in which the pipetting apparatus is used for aspirating or dispensing doses in the range of one microlitre to several (for example around 3 to 10 or 3 to 20) millilitres. Small valve and fluid circuit arrangements of this size bring about particular configuration and packaging issues, which require specific solutions.

The inventors have identified that in some pneumatic circuits which control pressure in multiple pipettes from a common or single pneumatic source, the pressure supplied to each pipette can fluctuate depending on the number of valves which are open at any given time, or with a single valve associated, the accuracy of each channels is dependent on the others This can lead to issues with fluids being dispensed or aspirated at different rates, which is undesirable, particularly in systems where dispensing accuracy is important. In other arrangements, circuits having a single pressure source and single pipette in each channel can suffer from a slow throughput per channel and are not space efficient. Hence, pneumatic circuits of this type are poorly suited for high-volume applications.

The inventors developed solutions which address drawbacks between the identified known systems, which are described in the following.

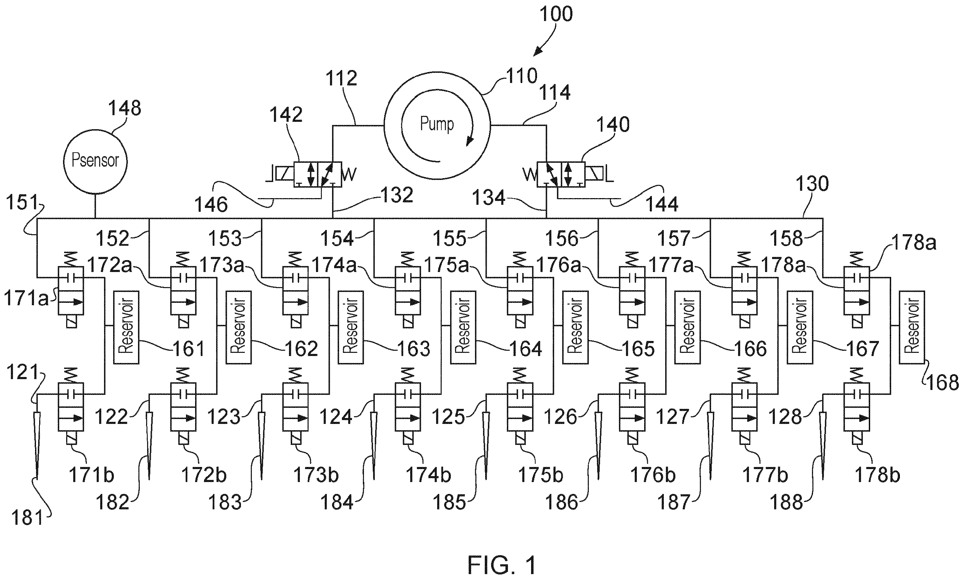

Figure 1 shows a pneumatic circuit 100 according to one aspect of the present disclosure.

The pneumatic circuit 100 comprises a pump 110 which is fluidly connected to a plurality of actuation ports 121-128 via a fluid distribution conduit 130.

In the embodiment illustrated in Figure 1, the pneumatic circuit 100 comprises eight actuation ports 121-128. However, it shall be appreciated that in other embodiments, a different number of actuation ports may be provided.

In the illustrated embodiment, the pump 110 is provided in the form of a pneumatic pump such as a diaphragm pump or the like. However, it shall be appreciated that in other embodiments, other types of pumps (such as Variable Displacement Pumps) may be used.

In the illustrated embodiment, the pump 110 comprises a pump inlet 112, which is provided in fluid communication with an outlet 132 of the fluid distribution conduit 130, for allowing the ingress of fluid (typically a gas, such as air) from the fluid distribution conduit 130 into the pump 110. The pump also comprises a pump outlet 114, which is provided in fluid communication with an inlet 134 of the fluid distribution conduit 130, for allowing the egress of fluid or gas (typically air) from the pump 110 and into the fluid distribution conduit 130.

The pneumatic circuit 100 also comprises a pair of first and second input valves 140, 142 which are operable to selectively provide a fluid connection between the inlet / outlet of the pump 110 and the fluid distribution conduit 130. The first input valve 140 can be provided between the outlet 114 of the pump and the inlet 134 of the fluid distribution conduit 130. The second input valve 142 can be provided between the inlet of the pump 112 and the outlet 132 of the fluid distribution conduit 130.

In the illustrated embodiment, the first input valve 140 is a 3/2 (or three-port, two position) valve comprising an inlet, which is provided in fluid communication with the outlet 114 of the pump 110, a first outlet 144 which is provided in fluid communication with a fluid source, and a second outlet which is provided in fluid communication with the inlet 134 of the fluid distribution conduit 130.

Similarly, in the illustrated embodiment, the second input valve 142 is also provided as a 3/2 valve (or three- port, two position valve). However, the second input valve 142 comprises a first inlet 146 which is provided in fluid communication with a fluid source, a second inlet which is provided in fluid communication with the outlet 132 of the fluid distribution conduit 130 and an outlet which is provided in fluid communication with the inlet 112 of the pump 110.

In the embodiment illustrated in Figure 1, the first outlet 144 of the first input valve 140 and the first inlet 146 of the second input valve 142 are provided in fluid communication with the external atmosphere. However, it shall be appreciated that in other embodiments, the first outlet 144 of the first input valve 140 and the first inlet 146 of the second input valve 142 may instead be provided in fluid communication with a corresponding reservoir containing air or another suitable fluid, which may be a gas.

The first input valve 140 is controllably moveable (via a solenoid or other suitable drive means) between a first position and a second position. When the first input valve 140 is placed in the first position, the first input valve 140 provides a fluid connection between the outlet 114 of the pump 110 and the inlet 134 of the fluid distribution conduit 130. However, when the first input valve 140 is in the first position, the valve does not allow fluid to exit the valve 140 via the first outlet 144. When the first input valve 140 is placed in the second position, the first input valve 140 provides a fluid connection between the outlet 114 of the pump 110 and first outlet 144. However, when the first input valve 140 is in the second position, the valve 140 does not permit the passage of fluid between the outlet 114 of the pump 110 and the inlet 134 of the fluid distribution conduit 130.

The second input valve 142 is also controllably moveable (via a solenoid or other suitable drive means) between a first position and a second position. When the second input valve 142 is placed in the first position, the second input valve 142 provides a fluid connection between the first inlet 146 of the second input valve 142 and the inlet 112 of the pump 110. However, when the second input valve 142 is in the first position, the valve 142 does not permit the passage of fluid between the outlet 132 of the fluid distribution conduit 130 and the inlet 112 of the pump 110. When the second input valve 142 is placed in the second position, the second input valve 142 provides a fluid connection between the outlet 132 of the fluid distribution conduit 130 and the inlet 112 of the pump 110. However, when second input valve 142 is placed in the second position, the valve does not allow fluid to enter the valve via the first inlet 146.

Consequently, by moving the first and second input valves between the respective first and second positions, the pneumatic circuit 100 can be moved between a first configuration, in which the pump 110 applies a positive pressure to the fluid distribution conduit 130, and a second configuration, in which the pump 110 applies a negative pressure to the fluid distribution conduit 130. Advantageously, this configuration allows a single pump to be used to supply both a positive and a negative pressure to the fluid distribution conduit 130.

When the pneumatic circuit 100 is in the first configuration (i.e., in which the first input valve 140 and the second input valve 142 are both in the first position), upon activation of the pump 110, fluid is drawn from the fluid source (in this case the external atmosphere), down the first inlet 146, through the second input valve 142, and into the inlet 112 of the pump 110. The fluid is then conveyed from the outlet 114 of the pump 110, through the first input valve 140, and into the inlet 134 of the fluid distribution conduit 130. In this manner, a positive pressure can be provided within the fluid distribution conduit 130.

In the illustrated embodiment, the pneumatic circuit 100 is designed to hold a positive pressure within the range of 5 mbar to 320 mbar when the pneumatic circuit is in the first configuration. However, it shall be appreciated that in other embodiments, the fluid distribution conduit may be designed to hold different magnitudes of pressure.

Conversely, when the pneumatic circuit 100 is in the second configuration (i.e., in which the first input valve 140 and the second input valve 142 are both in the second position), upon activation of the pump 110, fluid is drawn from the fluid distribution conduit 130 via the outlet 132, through the second input valve 142 and into the inlet 112 of the pump 110. Once the fluid has passed through the pump, it subsequently passes along the pump outlet 114, through the first input valve, and along the first outlet 144 whereby the fluid can be expressed into the surrounding atmosphere or into a separate reservoir or chamber. In this manner, a negative pressure (or an under-pressure) can be provided within the fluid distribution conduit 130.

In the illustrated embodiment, the pneumatic circuit 100 is designed to hold a negative pressure within the range of -5 mbar to -300 mbar. However, it shall be appreciated that in other embodiments, the fluid distribution conduit may be designed to hold different magnitudes of pressure.

The pneumatic circuit 100 may also comprise a pressure sensor 148 for determining a pressure within the fluid distribution conduit 130. In the illustrated embodiment, the pressure sensor 148 is provided at a location along the fluid distribution conduit 130. In some embodiments, the pressure sensor 148 may feed a pressure reading to an associated control system, display or monitor to enable an operator to determine the pressure provided within the fluid distribution conduit 130 and subsequently adjust the operation of the pump 110 as may be required. In other embodiments, the pressure sensor 148 may feed a pressure reading to an automated control system which may, in turn, automatically adjust the operation of the pump 110 based on the reading obtained from the sensor 148. It shall also be appreciated that in some embodiments, the pressure sensor 148 may be omitted. This can be, for example, in cases in which the pressure provided by the pump is sufficiently known and constant and adequate for the circumstances.

The fluid distribution conduit 130 is fluidly connected to the plurality of actuation ports 121-128 via a plurality of flow paths 151-158, with each flow path 151-158 extending from the fluid distribution conduit 130 to a respective one of the plurality of actuation ports 121-128.

In the illustrated embodiment, each of the plurality of flow paths 151-158 branch off from the fluid distribution conduit 130 at various points along the length of the fluid distribution conduit 130. As such, at least a portion of each of the plurality of flow paths 151-158 comprises a direct fluid connection to the fluid distribution conduit 130. In the embodiment illustrated in Figure 1, each of the plurality of flow paths 151-158 branch off from equidistant points along the length of the fluid distribution conduit 130. However, it shall be appreciated that in other embodiments, the points at which the plurality of flow paths 151-158 form a fluid connection with the fluid distribution conduit 130 may be unequally spaced, collocated, or provided in any configuration suitable to provide a common fluid connection between the input valves 140, 142 and plural valve arrangements associated with plural actuation ports, examples of which will be discussed in the following.

Each flow path 151-158 is also associated with a respective reservoir 161-168 and a respective valve arrangement which are located at various points along the flow path between the fluid distribution conduit 130 and the actuation port 121-128.

In the illustrated embodiment, eight flow paths are provided with each flow path extending from the fluid distribution conduit 130 to a respective one of the eight actuation ports 121-128. Therefore, in the illustrated embodiment, eight reservoirs and eight valve arrangements are also provided, one for each flow path. However, it shall be appreciated that in other embodiments, for example those featuring a different number of actuation ports, a different number of flow paths, reservoirs and valve arrangements may be provided.

The valve and reservoir arrangement according to the embodiment illustrated in Figure 1 shall now be described with reference to the first flow path 151. However, it shall be appreciated that the arrangement of the valves and reservoirs within the remaining flow paths 152-158 can also have any or all of the features of the arrangements described below.

The valve arrangement associated with the first flow path 151 comprises a first valve 171a which is located along the flow path 151 between the fluid distribution conduit 130 and the associated reservoir 161 and a second valve 171b which is located along the flow path 151 between the associated reservoir 161 and the actuation port 121.

The first valve 171a is a 2/2 valve (or a two-port, 2-position valve) having a first port in fluid communication with the fluid distribution conduit 130 and a second port in fluid communication with the reservoir 161. The first valve 171a is moveable between a first position (via a solenoid or other suitable drive means), in which the first valve 171a permits the passage of fluid from the fluid distribution conduit 130 to the reservoir 161, and a second position, in which the passage of fluid from the fluid distribution conduit 130 to the reservoir 161 is not permitted.

The second valve 171b is also provided in the form of a 2/2 valve (or two-way valve). The second valve 171b has a first port in fluid communication with the reservoir 161 and a second port in fluid communication with the actuation port 121. The second valve 171b is moveable between a first position (via a solenoid or other suitable drive means), in which the passage of fluid from the reservoir 161 to the actuation port 121 is not permitted, and a second position, in which the second valve 171b permits the passage of fluid from the reservoir 161 to the actuation port 121.

When the first and second valves 171a, 171b are in the first position (i.e., when the valve arrangement is in a first configuration) fluid is able to pass from the fluid distribution conduit 130, along the first flow path 151, through the first valve 171a and into the reservoir 161 (when a positive pressure is provided within the fluid distribution conduit 130), and from the reservoir 161, through the first valve 171a, along the first flow path 151 and into the fluid distribution conduit 130 (when a negative pressure is provided within the fluid distribution conduit 130). Consequently, when the valve arrangement is in the first configuration, the reservoir can be "charged" with a positive or negative pressure from the fluid distribution conduit 130.

When the first and second valves 171a, 171b are in the second position (i.e., when the valve arrangement is in a second configuration) fluid is able to pass from the reservoir 161, through the second valve 171b, and along the first flow path 151 to the actuation port 121 (when the reservoir 161 has been charged with a positive pressure), and from the actuation port 121, along the first flow path 151, through the second valve 171b, and into the reservoir 161 (when the reservoir 161 has been charged with a negative pressure). Consequently, when the valve arrangement is in the second configuration, the positive or negative pressure within the reservoir 161 can be applied to the actuation port 121 thereby causing the actuation port 121 to eject fluid from the pneumatic circuit 100 (in the case of the reservoir 161 being charged with a positive pressure) or aspirate fluid into the pneumatic circuit 100 (in the case of the reservoir 161 being charged with a negative pressure).

In the illustrated embodiment, the pneumatic circuit 100 is a pneumatic circuit for a pipetting apparatus and so each of the plurality of actuation ports 121-128 are configured to interface with a respective mandrel 181-188 configured for dispensing or aspirating a fluid to or from a receptacle or the like. However, it shall be appreciated that in other embodiments, the pneumatic circuit 100 may be used in different applications and so in other embodiments, the plurality of actuation ports 121-128 may be designed to interface with other components. It shall also be appreciated that the respective mandrels 181-188 do not form part of the pneumatic circuit 100 but are instead provided as separate parts designed to interface with the pneumatic circuit 100 illustrated in Figure 1.

Advantageously, in the pneumatic circuit according to the present disclosure each actuation port is fluidly connected to its own individual reservoir, which can be pre-charged to with desired pressure from the fluid distribution conduit, rather than being directly connected to the fluid distribution conduit. As such, the pneumatic circuit according to the present disclosure is better able to resist fluctuations in the pressure supplied to each actuation port when multiple valves are opened at the same time.

Furthermore, since the first and second valves 171a, 171b provided in the embodiment illustrated in Figure 1 are independently operable, the valve arrangement can also be placed into a third configuration, in which the first valve 171a is provided in the second position and in which the second valve 171b is provided in the first position such that fluid is unable to enter or exit the reservoir 161. Advantageously, this provision enables the reservoir 161 to store a "charged" pressure once the pressure within the reservoir 161 reaches a desired level without having to immediately transfer said pressure to the associated actuation port 121.

Whilst the valve arrangement described in relation to Figure 1 features a pair of 2/2 valves, it shall be appreciated that in other embodiments, different types of valve arrangement may be provided. Such valves can be actuated to selectively permit and restrict fluid flow between the reservoir 161 and the fluid distribution conduit 130. Such valves can also be actuated to selectively permit and restrict fluid flow between the actuation port 121 and the reservoir 161.

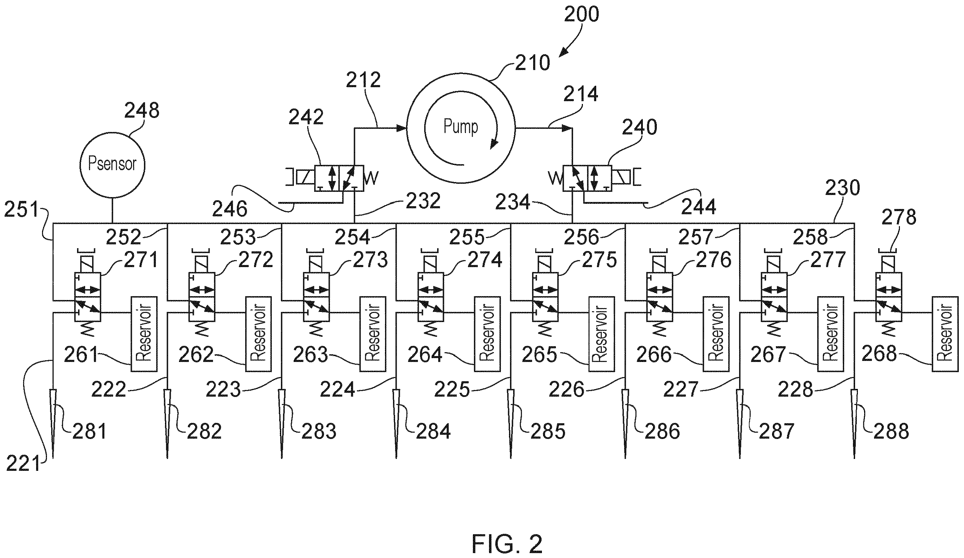

A pneumatic circuit 200 according to an alternative embodiment of the present disclosure is illustrated in Figure 2.

Features corresponding to those of the previous embodiment have been given corresponding reference numbers with the additional prefix "2". The pneumatic circuit 200 illustrated in Figure 2 comprises many of the same features as the pneumatic circuit 100 illustrated in Figure 1. Therefore, only features that differ from those of the previous embodiment are discussed in detail.

Notably, the pneumatic circuit comprises a pump 210 which is fluidly connected to a plurality of actuation ports 221-228 via a fluid distribution conduit 230. The fluid distribution conduit 230 is fluidly connected to the plurality of actuation ports 221-228 via a plurality of flow paths 251-258, with each flow path 251-258 being associated with a respective reservoir 261-268 and a respective valve arrangement 271-278.

However, in the pneumatic circuit 200 illustrated in Figure 2, the valve arrangement 271-278 associated with each flow path 251-258 is provided as a single 3/2 valve (or three-port, two-position valve) rather than as a pair of 2/2 valves.

The valve and reservoir arrangement according to the embodiment illustrated in Figure 2 shall now be described with reference to the first flow path 251. However, it shall be appreciated that the arrangement of the valves and reservoirs within the remaining flow paths 252-258 can comprise any or all of the features described below.

As set out above, the valve arrangement illustrated in Figure 2 comprises a 3/2 valve (or a three-port, two-position valve) 271 having a first port arranged in fluid communication with the fluid distribution conduit 230, a second port arranged in fluid communication with the reservoir 261, and a third port arranged in fluid communication with the actuation port 221.

The valve 271 is controllably moveable (via a solenoid or other suitable drive means) so as to move the valve arrangement between a first configuration and a second configuration.

When the valve arrangement is in the first configuration, the valve 271 provides a fluid connection between the fluid distribution conduit 230 and the reservoir 261. Therefore, when the valve arrangement is in the first configuration fluid is able to pass from the fluid distribution conduit 230, along the first flow path 251, through the valve 271 and into the reservoir 261 (when a positive pressure is provided within the fluid distribution conduit 130), and from the reservoir 161, through the valve 271, along the first flow path 251 and into the fluid distribution conduit 230 (when a negative pressure is provided within the fluid distribution conduit 130). However, when the valve arrangement is in the first configuration, the valve 271 does not allow the passage of fluid between the reservoir 261 and the actuation port 221. Consequently, when the valve arrangement is in the first configuration, the reservoir 261 can be "charged" with a positive or negative pressure from the fluid distribution conduit 230.

When the valve arrangement is in the second configuration, the valve 271 provides a fluid connection between the reservoir 261 and the actuation port 221. Therefore, when the valve arrangement is in the second configuration, fluid is able to pass from the reservoir 261, through the valve 271, and along the first flow path 251 to the actuation port 221 (when the reservoir 261 has been charged with a positive pressure), and from the actuation port 221, along the first flow path 251, through the second valve 271, and into the reservoir 261 (when the reservoir 261 has been charged with a negative pressure). However, when the valve arrangement 271 is in the second configuration, the valve does not allow the passage of fluid between the fluid distribution conduit 230 and the reservoir 261. Consequently, when the valve arrangement is in the second configuration, the positive or negative pressure within the reservoir 261 can be applied to the actuation port 221 thereby causing the actuation port 221 to eject fluid from the pneumatic circuit 200 (in the case of the reservoir 261 being charged with a positive pressure) or vacuum fluid into the pneumatic circuit 200 (in the case of the reservoir 261 being charged with a negative pressure).

As with the embodiment illustrated in Figure 1, the pneumatic circuit 200 is also a pneumatic circuit for a pipetting apparatus and so each of the plurality of actuation ports 221-228 are configured to interface with a respective mandrel 281-288 configured for dispensing or aspirating a fluid to or from a receptacle or the like. However, it shall be appreciated that in other embodiments, the pneumatic circuit 200 may be used in different applications and so, in other embodiments, the plurality of actuation ports 221-228 may be designed to interface with other components. It shall also be appreciated that the respective mandrels 281-288 do not form part of the pneumatic circuit 200 but are instead provided as separate parts designed to interface with the pneumatic circuit 200 illustrated in Figure 2.

However, unlike the embodiment illustrated in Figure 1, the valve arrangement illustrated in Figure 2 does not provide a third configuration in which the reservoir is isolated from both the fluid distribution conduit 230 and the actuation port 221. In one mode of operation, once the reservoir 261-268 has reached a desired pressure and the valve arrangement is moved into the second configuration, the pressure within the reservoir can be immediately applied to the actuation port 221-228 associated with said reservoir 261-268. As such, the pneumatic circuit 200 illustrated in Figure 2 is more compact, requires fewer components and has a reduced number of configurations as compared to the embodiment illustrated in Figure 1.

The physical implementation of pneumatic circuits of the type disclosed herein bring about particular challenges, in particular as regards efficient configuration of the channels and associated valves for suitably compact packaging of the overall drive apparatus. In particular, it can be advantageous to provide an array of closely-spaced actuation ports, such that the petting heads associated with the actuation ports can also be closely spaced. Particularly beneficial implementations of the present disclosure, a spacing between the actuation ports, to which pipetting heads may be attached, is of the order of 4 mm to 20 mm.

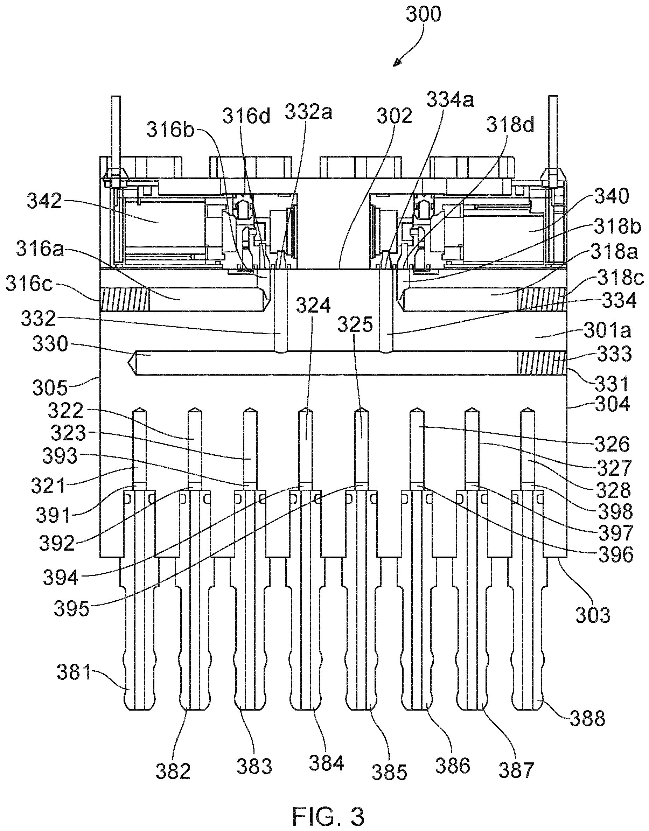

A pneumatic drive apparatus 300 according to an embodiment of the present disclosure is illustrated in Figures 3 to 5. The pneumatic drive apparatus 300 illustrated in Figures 3 to 5 is one way in which the pneumatic circuit 100 illustrated in Figure 1 can be realised.

While the arrangement illustrated in Figure 3 comprises a manifold and valves attached to the manifold, it shall be appreciated that in other embodiments, the fluid distribution conduit 130 and plurality of flow paths 151-158 may be provided via a series of hoses, conduits or channels or another suitable fluid communication means. As such, it shall be appreciated that the provision of a manifold is not essential to realising the pneumatic circuit 100 illustrated in Figure 1.

The pneumatic drive apparatus 300 illustrated in Figures 3 to 5 is made for connection to a pump (not shown), and comprises first and second input valves 340, 342, a plurality of valve arrangements 371-378 and a manifold 301. The first and second input valves 340, 342 are arranged to operate in the same manner as the input valves 140, 142 described in relation to Figure 1 and so, for the sake of conciseness, shall not be described in detail within this part of the application. Features corresponding to those of the arrangement of Figure 1 have been given corresponding reference numbers with the additional prefix "3".

The manifold 301 illustrated in Figure 3 is provided in the form of a single, unitary block having a body 301a comprising an upper surface 302, a lower surface 303, a pair of side surfaces 304, 305, a front surface 306 and a rear surface 307.

In the illustrated embodiment, the upper surface 302 of the manifold 301 also comprises a pair of protrusions 302a and 302b which extend away from the body 301a of the manifold 301.

The first protrusion 302a extends across a width of the upper surface 302 proximal to the front surface 306. In the illustrated embodiment, the first protrusion 302a is integrally formed with the body 301a of the manifold 301.

The second protrusion 302b extends across a width of the upper surface 302 proximal to the rear surface 307. In the illustrated embodiment, the second protrusion 302b is also integrally formed with the body 301a of the manifold 301.

The first 302a and second protrusions 302b are spaced apart by a distance such that a channel 302c is defined between the first 302a and second 302b protrusions. In the illustrated embodiment, the channel 302c used for housing the first 340 and second 342 input valves when the manifold 301 is used within a pneumatic drive apparatus 300.

A fluid distribution conduit 330 is provided within the body of the manifold 301. The fluid distribution conduit 330 extends across the body of the manifold 301 from an opening 331 provided within the first side surface 304 of the manifold 301 and terminates within the body of the manifold 301 proximal to the second side surface 305.

In the illustrated embodiment, the fluid distribution conduit 330 has a longitudinal axis which is substantially parallel to the upper 302 and lower 303 surfaces of the manifold body 301a. In other words, the fluid distribution conduit 330 is orientated substantially horizontally if a side of the manifold on which the actuation ports are located is considered a lower surface and is oriented downwardly. However, it shall be appreciated that in other embodiments, the fluid distribution conduit 330 may be provided in a different orientation relative to the actuation ports.

The fluid distribution conduit 330 can be formed as a single bore which can be suitable for convenient manufacture. For example, it can be machined into the manifold 301 through the first side surface 304 using a suitably sized drill-bit, boring tool, or other material removal device. It could also be conveniently moulded into the manifold as linear bores can be suited to processes such as injection moulding, in which linear channels can be formed by moulding around a suitable mandrel. In the illustrated embodiment, a threaded surface portion 333 is also provided along a part of the fluid distribution conduit 330 proximal to the opening 331. In some embodiments, the threaded surface portion 333 may be used to couple the fluid distribution conduit 330 to a pressure sensor (not shown) in a fluid-tight manner to prevent fluid from escaping the manifold 301 via the opening 331, and it may therefore conveniently provide a sensor connecting feature for retaining a sensor to the manifold. However, in other embodiments, the opening 331 may instead be sealed by a bung, filler material or any other suitable means. As such, in some embodiments, the threaded surface portion may be omitted.

The manifold 301 further comprises an inlet 334 and an outlet 332. In the illustrated embodiment, the inlet 334 and the outlet 332 are provided as a pair of channels extending from respective openings 332a, 334a provided within the upper surface 302 of the manifold 301.

The inlet 334 is arranged to provide a fluid connection between the second outlet of the first pump valve 340 and the fluid distribution conduit 330. The outlet 332 is arranged to provide a fluid connection between the second inlet of the second pump valve 342 and the fluid distribution conduit 330.

The channels which define the inlet 334 and outlet 332 of the manifold 301 each have a longitudinal axis which is non-parallel to the longitudinal axis of the fluid distribution conduit 330, an each intersects with the distribution conduit 330 to enable fluid flow between them. In the illustrated embodiment, the channels which define the inlet 334 and the outlet 332 of the manifold are orientated substantially perpendicular to the longitudinal axis of the fluid distribution conduit 330. However, in other embodiments, the channels may have a different relative orientation whilst still permitting fluid flow therebetween.

The channels which define the inlet 334 and the outlet 332 are each formed as a single bore extending from the upper surface 302 of the manifold and may terminate at or near the fluid distribution conduit 330. In the illustrated embodiment, the inlet and outlet channels may be machined into the upper surface 302 of the manifold 301 using a drill-bit or boring tool which is smaller than that which is used to machine the fluid distribution conduit 330. The respective diameters of the channels forming the inlet 334 and outlet 332 can be smaller than the diameter of the fluid distribution conduit 330. However, in other embodiments, the inlet and the outlet channels and the fluid distribution conduit may have the same diameters and so could be machined into the manifold body using the same drill-bit or tool.

A pump inlet channel 316 and a pump outlet channel 318 are also provided within the manifold 301. In the illustrated embodiment, the pump inlet channel 316 and the pump outlet channel 318 are located proximal to the upper surface 302 of the manifold body 301a. The pump inlet channel 316 is arranged so as to provide a fluid connection between the outlet of the second input valve 342 and an inlet 312 of the pump 310 (not shown). The pump outlet channel 318 is arranged so as to provide a fluid connection between the inlet of the first input valve 340 and an outlet 114 of the pump 310 (not shown).

The pump inlet channel 316 is also provided within the body of the manifold 301. The pump inlet channel 316 comprises a first section 316a and a second section 316b. The first section 316a of the pump inlet channel 316 extends from an opening 316c provided within the second side surface 305 of the manifold 301 and terminates within the body of the manifold 301.

In the illustrated embodiment, the first section 316a of the pump inlet channel 316 has a longitudinal axis which is substantially parallel to the upper 302 and lower 303 surfaces of the manifold 301. In other words, the first section 316a of the pump inlet channel 316 is substantially horizontally orientated if the upper 302 and lower 303 surfaces of the manifold 301 are horizontally oriented. Furthermore, in the illustrated embodiment, the longitudinal axis of the first section 316a of the pump inlet channel 316 is also substantially parallel to the longitudinal axis of the fluid distribution conduit 330. However, it shall be appreciated that in other embodiments, the first section of the pump inlet channel 316a may be provided in a different orientation.

The first section 316a of the pump inlet channel is formed as a single bore which can be machined into the manifold 301 through the second side surface 305 using a suitably sized tool. In the illustrated embodiment, the first section 316a of the pump inlet channel 316 and the fluid distribution conduit 330 have the same diameters and so could be machined into the manifold body using the same size of drill-bit or tool. As such, the diameter of the first section 316a of the pump inlet channel 316 is substantially the same as the diameter of the fluid distribution conduit 330. However, it shall be appreciated that in other embodiments, the first section 316a of the pump inlet channel 316 and the fluid distribution conduit 330 may comprise different diameters.

A threaded surface portion is also provided along a portion of the pump inlet channel 316 proximal to the opening 316c. The threaded surface portion is provided for engagement with a corresponding surface provided at the pump inlet 312 (not shown). However, it shall be appreciated that in other embodiments, other suitable forms of connection may be provided and so, in some embodiments, the threaded surface portion may be omitted or replaced by other retaining means.

The second section 316b of the pump inlet channel 316 provides a fluid connection between the first section 316a of the pump inlet channel 316 and an opening 316d provided in the upper surface 302 of the manifold 301. In the illustrated embodiment, the pump inlet channel 316 is substantially L-shaped. As such, in the illustrated embodiment the second section 316b of the pump inlet channel 316 is orientated substantially vertically, perpendicular to the first section 316a of the pump inlet channel 316. However, in other embodiments, the second section 316b of the pump inlet channel 316 may have a different orientation.

The second section 316b of the pump inlet channel 316 is formed as a single bore which can be machined into the manifold 301 through the upper surface 302 using a suitably sized tool. In the illustrated embodiment, the second section 316b of the pump inlet channel 316 is machined into the upper surface 302 of the manifold 301 using a tool which is smaller than that which is used to machine the first section 316a of the pump inlet channel 316. As such, the diameter of the second section 316b of the pump inlet channel 316 is smaller than the diameter of the first section 316a of the pump inlet channel 316. However, in other embodiments, the first and second sections of the pump inlet channel 316 may have the same diameter, which can allow them to be machined into the manifold body using the same drill-bit or tool.

The pump outlet channel 318 is also provided within the body of the manifold 301 and comprises a first section 318a and a second section 318b. The first section 318a of the pump outlet channel 318 extends from an opening 318c provided within the first side surface 304 of the manifold 301 and terminates within the body of the manifold 301.

In the illustrated embodiment, the first section 318a of the pump outlet channel 318 has a longitudinal axis which is substantially parallel to the upper 302 and lower 303 surfaces of the manifold 301. In other words, the first section 318a of the pump outlet channel 318 is orientated substantially horizontally if the upper 302 and lower 303 surfaces of the manifold 301 are horizontally oriented. Furthermore, in the illustrated embodiment, the longitudinal axis of the first section 318a of the pump outlet channel 318 is also substantially parallel to the longitudinal axis of the fluid distribution conduit 330. In the illustrated embodiment, the first section 318a of the pump outlet channel 318 is also coaxial with the first section 316a of the pump inlet channel 316 provided on the other side of the manifold 301.

The first section 318a of the pump outlet channel 318 is formed as a single bore which can be machined into the manifold 301 through the first side surface 304 using a suitably sized tool. In the illustrated embodiment, the first section 318a of the pump outlet channel 318 and the fluid distribution conduit 330 have the same diameters and so could be machined into the manifold body using the same size of drill-bit or tool. As such, the diameter of the first section 318a of the pump outlet channel 318 is substantially the same as the diameter of the fluid distribution conduit 330. The diameter of the first section 318a of the pump outlet channel 318 is also substantially the same as the diameter of the first section 316a of the pump inlet channel 316. However, it shall be appreciated that in other embodiments, the first section 318a of the pump outlet channel 316 may have a different diameter to that of the fluid distribution conduit 330 and/or the first section 316a of the pump inlet channel 316.

A threaded surface portion is also provided along a portion of the pump outlet channel 318 proximal to the opening 318c. The threaded surface portion is provided for engagement with a corresponding surface provided at the pump outlet 314 (not shown). However, it shall be appreciated that in other embodiments, other suitable forms of connection may be provided and so, in some embodiments, the threaded surface portion may be omitted or replaced by other retaining means.

The second section 318b of the pump outlet channel 318 provides a fluid connection between the first section 318a of the pump outlet channel 318 and an opening 318d provided in the upper surface 302 of the manifold 301. In the illustrated embodiment, the pump outlet channel 318 is substantially L-shaped. As such, in the illustrated embodiment the second section 318b of the pump outlet channel 318 is orientated substantially vertically, perpendicular to the first section 318a of the pump outlet channel 318. However, in other embodiments, the second section 318b of the pump outlet channel 318 may have a different orientation.

The second section 318b of the pump outlet channel 318 is formed as a single bore which can be machined into the manifold 301 through the upper surface 302 using a suitably sized tool. In the illustrated embodiment, the second section 318b of the pump outlet channel 318 is machined into the upper surface 302 of the manifold 301 using a tool which is smaller than that which is used to machine the first section 318a of the pump outlet channel 318. As such, the diameter of the second section 318b of the pump outlet channel 318 is smaller than the diameter of the first section 318a of the pump outlet channel 318. However, in other embodiments, the first and second sections of the pump outlet channel 318 may have the same diameter, which can allow them to be machined into the manifold body using the same drill-bit or tool.

The manifold comprises a plurality of actuation ports 321-328. These may be provided within the manifold 301 and may be provided in any number such as 8 or more.

In the illustrated embodiment, the plurality of actuation ports 321-328 comprise a series of channels which extend from respective openings provided in the bottom surface 303 of the manifold 301 and terminate within the body 301a of the manifold 301. Each channel can be formed as a single bore which may be machined into the manifold via an external surface such as the bottom surface, using a suitably sized tool such as a drill-bit. However, it shall be appreciated that in other embodiments, other suitable manufacturing methods may be used.

In the illustrated embodiment, a plurality of channels which constitute the plurality of actuation ports 321-328 may be provided in parallel, or may more generally be provided such that the longitudinal axes of the plurality of actuation ports 321-328 do not intersect one another. The plurality of actuation ports 321-328 may be substantially vertically orientated when the bottom surface 303 is downwardly facing. One or more of the longitudinal axes of the plurality of actuation ports 321-328 may intersect the longitudinal axis of the fluid distribution conduit 330. The plurality of actuation ports 321-328 may be orientated substantially perpendicularly to the fluid distribution conduit 330. However, it shall be appreciated that in other embodiments, the channels defining the plurality of actuation ports may be provided at different locations and may have different orientations.

In the illustrated embodiment, the pneumatic drive apparatus is configured for use within a pipetting apparatus and so one or more of the channels which define the plurality of actuation ports 321-328 may comprise a connection region, comprising pipette connecting means, such as a threaded surface portion, (not shown) located proximal to the opening of one or more actuation ports 321-328. The threaded surface portions are provided as an example of means suitable to provide a connection interface between one, some or each of the plurality of actuation ports 321-328 and a mandrel 381-388 of the pipetting apparatus. However, it shall be appreciated that in other embodiments different forms of connection interface may be used. Therefore, in some embodiments, the threaded surface portions may be omitted.

It shall also be appreciated that the respective mandrels are provided for illustrative purposes only and hence do not form part of the pneumatic drive apparatus according to the present disclosure.

A corresponding filter 391-398 may be provided within at least one channel to prevent incidental inclusions or debris which may be present in the manifold 301 from being ejected from the actuation ports 321-328. The filter also helps to prevent incidental inclusions or debris from entering the system via the actuation ports 321-328 in instances where the fluid distribution conduit 330 has been charged with a negative pressure. However, in some embodiments, the filters 391-398 may be omitted.

Each of the plurality of actuation ports 321-328 is fluidly connected to the fluid distribution conduit 330 by a respective flow path 351-358, with each flow path 351-358 being associated with a respective reservoir and a respective valve arrangement. In the illustrated embodiment, the manifold 301 comprises eight flow paths which are each associated with a corresponding valve arrangement and reservoir. However, it shall also be appreciated that in embodiments featuring a different number of actuation ports, a different number of flow paths, valve arrangements and reservoirs may be provided.

Beneficial features which can be more generally appreciated from figure 3 can be described as follows. The manifold 301 may comprise a plurality of external surfaces and a fluid distribution conduit 330. The plurality of external surfaces may comprise a first external surface 302 and a second external surface 303 opposite the first external surface. Fluid distribution conduit 330 may be substantially linear. A plurality of actuation ports 321-328 may be arranged opening out of the second external surface 303 to a first side of an axis of the fluid distribution conduit 330. One or more openings 318d, 316d, may be provided for fluidly connecting one or more input and/or output valves to the fluid distribution conduit and may be provided on a different external surface to the first surface 303 of the manifold. The one or more openings 318d, 316d may be provided on the first external surface 302. An inlet opening 316c and/or an outlet opening 318c may be provided to the manifold. These may be provided on a different surface of the manifold from first or second surfaces. The manifold 301 may be configured to receive a plurality of output devices, such as pipette tips, on a same side as the second surface 303 and may further be configured to receive one or more valves mounted to the first surface 302. The valves to be mounted to the first surface 302 may be for controlling fluid flow between the inlet 316c and/or outlet 318c opening and the fluid distribution conduit. Fluid paths may be provided within the manifold extending between the first surface 302 and the fluid conduit 330 such that one or more valves 342, 340, mounted to the first surface can control fluid flow between one or more inlet and/or outlet ports of the manifold and the fluid distribution conduit 330. The one or more inlet and/or outlet ports may be provided on different surfaces of the manifold to the ports for the valves 342, 340.

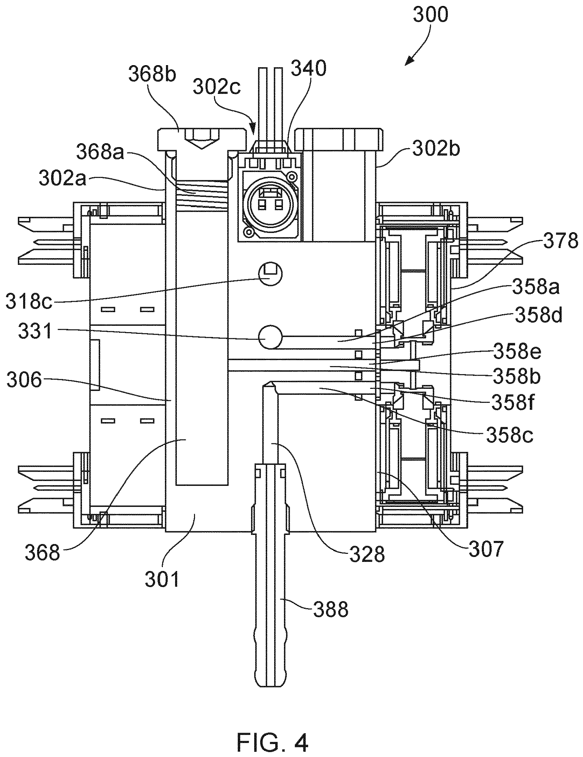

The respective flow paths are not visible within Figure 3 and so shall be described in greater detail with reference to Figure 4. It shall be appreciated that since Figure 4 is a side view, only one flow path 358 is visible therein. However, it shall be appreciated that the remaining flow paths 351-357 can be provided in substantially the same configuration with any or all of the same corresponding features.

As is shown in Figure 4, the flow path 358 comprises a first section 358a for providing a fluid connection between the fluid distribution conduit 330 and the associated valve arrangement 378, a second section 358b for providing a fluid connection between the associated valve arrangement 378 and the reservoir 368, and a third section 358c for providing a fluid connection between the associated valve arrangement 378 and the actuation port 328.

The longitudinal axes of the first 358a, second 358b and third 358c sections of the flow path can be provided such that the longitudinal axes of the first 358a, second 358b and third 358c sections do not intersect, and may be substantially parallel. Furthermore, the longitudinal axes of the first 358a, second 358b and third 358c sections of the flow path may be substantially parallel to the upper 302 and lower 303 surfaces of the manifold 301. In other words, the first, second and third sections may be orientated substantially horizontally if the lower surface 303 is downwardly facing. However, it shall be appreciated that in other embodiments, the first, second and third sections may have different orientations.

The valve arrangement 378 can be provided as a separate component to the manifold 301. Any or all of the first 358a, second 358b and third 358c sections can also comprise a respective opening (or valve port) 358d, 358e, 358f provided in the rear surface 307 of the manifold 301 to facilitate connection between one or more of the first 358a, second 358b, and third 358c sections of the flow path and the valve arrangement 378. In the illustrated embodiment, the first 358a, second 358b and third 358c sections of the flow path 358 (and their respective openings) are each formed as a single bore machined into the rear surface 307 of the manifold 301 using a suitably sized tool. However, it shall be appreciated that in other embodiments, other suitable manufacturing or machining methods may be used.

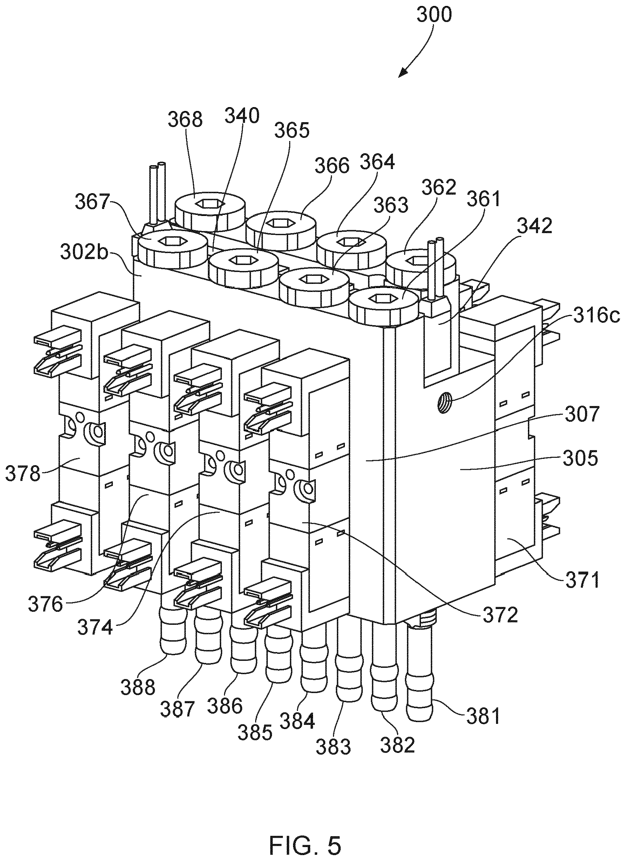

As is shown in Figure 5, a plurality of valve arrangements may be connected to the manifold 301 at the front surface 306. A further plurality of valve arrangements may be connected to the manifold 301 at the rear surface 307. Therefore, whilst the first 358d, second 358e, and third 358f openings of the flow path 358 are provided within the rear surface 307 of the manifold 301, the openings of one or more other flow paths may be provided in the front surface 306.

Returning to Figure 4, the reservoir 368 defines a volume 368c which can be "charged" with a positive or negative pressure from the fluid distribution conduit 330, as has been described previously with reference to Figure 1.

The reservoir 368 can be provided as a cavity within the manifold. The reservoir may be substantially vertically orientated such that the longitudinal axis of the reservoir 368 intersects the longitudinal axes of one or more of the first 358a, second 358b and third 358c sections of the flow path 358. The longitudinal axis of the reservoir 368 may also intersect the longitudinal axis of the fluid distribution conduit 330. In other words, the longitudinal axis of the reservoir 368 can be substantially perpendicular to one or more of the longitudinal axes of the respective sections 358a-c of the flow path 358 and to the longitudinal axis of the fluid distribution conduit 330. However, it shall be appreciated that in other embodiments, the reservoir 368 may be provided at a different orientation.

As shown in Figure 4, the reservoir 368 may extend from an opening 368a in the manifold, which may be provided in the first protrusion 302a, of the manifold 301 (i.e., the upper surface 302) and may terminate within the body 301a of the manifold. In the illustrated embodiment, the reservoir 368 also comprises a threaded surface located proximal to the opening 368a. The threaded surface is configured to engage with a corresponding bung 368b to prevent fluid from escaping the reservoir 368 via the opening 368a. However, it shall be appreciated that in other embodiments, a different form of sealing may be used to more generally provide a sealing member to close an opening of the cavity provided in the manifold to provide the reservoir.

As will be appreciated from the drawings, the reservoir 368 can be provided as a longitudinally extending bore provided in the manifold, optionally in the first protrusion 302a. This may be done using a suitably sized tool or drill-bit. However, it shall be appreciated that in other embodiments, the reservoir 368 may be created using a different manufacturing technique to more generally form a cavity in the manifold.

One or more of the valve arrangements 371-378 and corresponding reservoirs 361-368 can be located opposite to one another such a corresponding flow path 351-358 follows a tortuous path between the fluid distribution conduit 330 and its respective actuation port 321-328. A tortuous path is non-direct, and can include sections causing the fluid to at least partially return on itself before reaching its destination. In the illustrated embodiment, the valve arrangement 378 is connected to the rear surface 307 of the manifold 301 (via the openings 358d, 358e, 358f) and so the reservoir 368 is provided proximal to the front surface 306 of the manifold 301. However, it shall be appreciated that in flow paths wherein the openings are provided on the front surface 306 of the manifold 301, the corresponding reservoirs may instead be located proximal to the rear surface 307 of the manifold. This is the case with reservoirs 361, 363, 365 and 367 illustrated in Figure 5. Arranging the flow paths in this manner helps to maximise the usage of space within the manifold 301 thereby resulting in a more compact design.

Beneficial features which can be more generally appreciated from figure 4 can be described as follows. The manifold may comprise one or more reservoirs 368 provided to a first side of the fluid distribution conduit 330, and may further comprise one or more valve ports, for connection to a valve arrangement 378, disposed on a surface 307 of the manifold 301, which surface may be on a side of the fluid distribution conduit 330 opposite to the one or more reservoirs 368. The valve arrangement 378 arranged to the opposite side of the distribution conduit 330 may be for controlling a fluid flow between the fluid distribution conduit 330 and the one or more reservoirs 368. More particularly, the manifold may be arranged with a plurality of reservoirs 368. Each respective reservoir 368 may be associated with a respective valve arrangement 378 each respective valve arrangement 378 may be arranged to an opposite side of the fluid distribution conduit 330 to its respective reservoir 368. The fluid distribution conduit 330 may extend longitudinally between a plurality of reservoirs 368 and a plurality of valve arrangements for controlling fluid flow between the respective reservoirs and the fluid distribution conduit 330. The manifold 301 may be arranged such that a first array of one or more reservoirs is arranged to a first side of the fluid distribution conduit 330 and a second array of one or more reservoirs is arranged to a second side of the fluid distribution conduit 330 opposite the first side. The manifold may further be configured such that a first array of one or more valve arrangements, for control of flow between the fluid distribution conduit 330 and the first array of one or more reservoirs, can be arranged to the second side of the fluid distribution conduit, and such that a second array of one or more valve arrangements, for control of flow between the fluid distribution conduit 330 in the second array of one or more reservoirs, can be arranged to the first side of the fluid distribution conduit 330, by providing suitable ports and flow paths for connection to such valves.

As set out previously with reference to Figure 1, in the embodiment illustrated in Figures 3 to 5, the valve arrangements 371-378 are provided as a pair of 2/2 (or two-way) valves. However, in other embodiments, it shall be appreciated that other types of valve arrangement may be used.

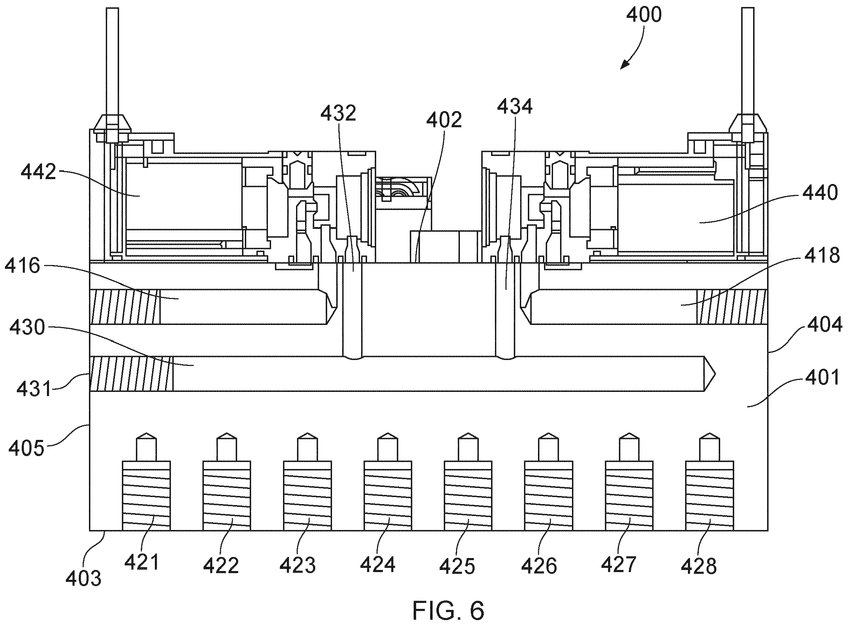

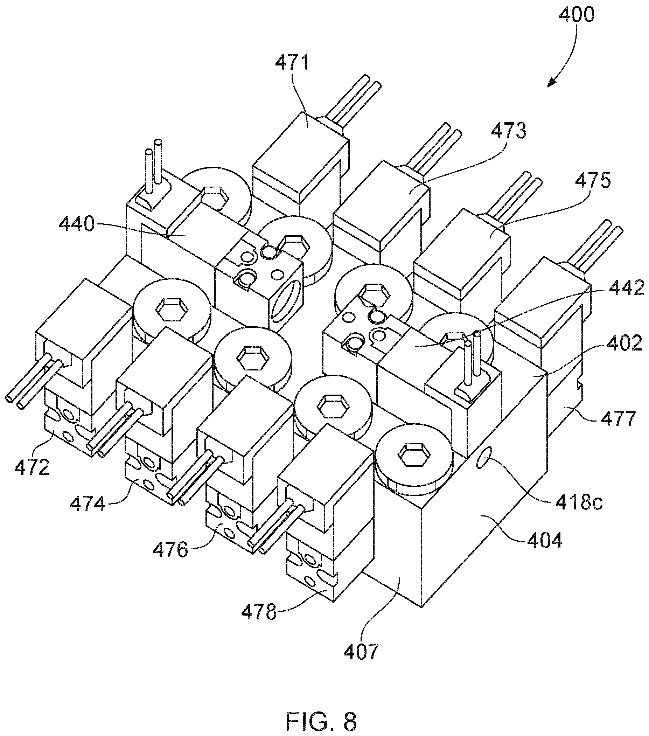

A pneumatic drive apparatus 400 according to an alternative embodiment of the present disclosure is illustrated in Figures 6 to 8. The pneumatic drive apparatus 400 illustrated in Figures 6 to 8 is one way in which the pneumatic circuit 200 illustrated in Figure 2 can be realised.

However, it shall be appreciated that in other embodiments, the fluid distribution conduit 230 and plurality of flow paths 251-258 may be provided via a series of hoses or channels or another suitable means. As such, it shall be appreciated that the provision of a manifold is not essential to realising the pneumatic circuit 200 illustrated in Figure 2.

It shall be also appreciated that the pneumatic drive apparatus 400 illustrated in Figures 6 to 8 comprises many of the same features as the pneumatic drive apparatus 300 illustrated in Figures 3 to 5. Therefore, only features that differ from those of the previous embodiment are discussed in detail. Features corresponding to those of the previous embodiment have been given corresponding reference numbers with the additional prefix "4". It will be appreciated from the figures that the manifold illustrated in figures 6 to 8 comprises many of the same beneficial features as have been described in relation to figures 3 to 5, notably with respect to the relative placement of the valve arrangements and the reservoirs with respect to the fluid distribution conduit, the relative arrangement of the inlet and outlet valves and inlet and outlet ports, and the sensor connecting features for enabling the monitoring of a pressure within the fluid distribution conduit.

As with the pneumatic drive apparatus 300 illustrated in Figures 3 to 5, the pneumatic drive apparatus 400 illustrated in Figures 6 to 8 may comprise a pump (not shown), first and second input valves 440, 442, a plurality of valve arrangements 471-478 and a manifold 401.

Differently to the pneumatic drive apparatus 300 illustrated in Figures 3 to 5, the plurality of valve arrangements 471-478 each comprise a single 3/2 (or three way) valve rather than a pair of 2/2 (or two-way) valves.

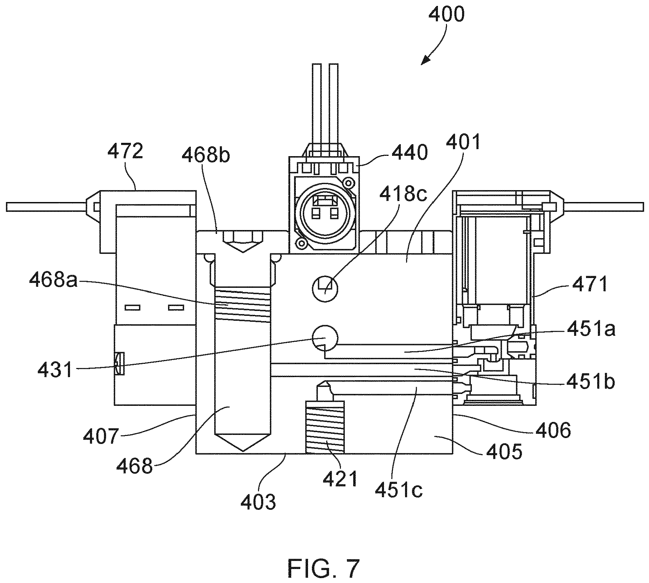

Differently to the manifold 301 described in Figures 3 to 5, the manifold 401 is substantially cuboid in shape and so does not feature a pair of first and second protrusions located on the upper surface 402 of the manifold body. Instead, as can be seen in Figure 7, the reservoirs 468 are substantially shorter in this embodiment and extend from an opening 468a provided in the upper surface 402 of the manifold body. These differences result in a more compact, albeit less "controllable" apparatus.

In the embodiment illustrated in Figure 4, the opening 431 of the fluid distribution conduit 440 is also provided in the second side surface 405 rather than the first side surface 404, and hence the fluid distribution conduit 440 extends from an opening provided in the second side surface 405 and terminates within the body of the manifold 401 proximal to the first side surface 404.

The valve arrangements can be positioned front and rear surfaces of the manifold. They may be positioned on such surfaces in a substantially linear array. The valve arrangements on each surface may be arranged in a row.

One array or more of the valves located on the manifold may be arranged in a quincunx. In related examples, one or more valves may be arranged in a square, rectangular or retanguloid array on the manifold, while a further valve may be arranged at, near or around a centre of the square, rectangular or retanguloid array, so as to be substantially located within the array. Valves or valve arrangements located at the corners of the square or rectanguloid array may be located on the front surface of the manifold and/or the rear surface of the manifold. A further valve arrangement may be positioned centrally to the rectanguloid array on the same or a different surface to the valves of the rectanguloid array. Locating a valve with a rectanguloid array of other valves on the manifold can reduce the pitch or distance between channels in the manifold, which can reduce the distances between valves, reservoirs, and/or actuation ports. This can also increase overall space efficiency of the valve and manifold arrangement and reduce internal volumes. This can improve performance and accuracy of control for the overall circuit, due to reduced fluid resistance and/or overall compressibility of the volumes in the manifold.

In the embodiments illustrated, the valve arrangements are equally distributed between the front and rear surfaces of the manifold. In other words, the same number of valve arrangements are provided on the front surface as are provided on the rear surface. However, in other embodiments, the valve arrangements may be unequally distributed between the front and rear surfaces. In other words, the number of valve arrangements provided at the front surface may be greater or less than the number of valve arrangements provided at the rear surface.

Although the invention has been described above with reference to one or more preferred embodiments, it will be appreciated that various changes or modifications may be made without departing from the scope of the invention as defined in the appended claims

## Claims

1. A pneumatic circuit for a pneumatic drive apparatus comprising:
a pump;
a fluid distribution conduit;
a plurality of reservoirs;
a plurality of actuation ports;
a first input valve operable to selectively provide a fluid connection between an outlet of the pump and the fluid distribution conduit;
a second input valve operable to selectively provide a fluid connection between an inlet of the pump and the fluid distribution conduit; and
a plurality of flow paths, each flow path extending from the fluid distribution conduit to a respective one of the plurality of actuation ports;
wherein each flow path is associated with a respective one of the plurality of reservoirs and a corresponding valve arrangement; and
wherein each valve arrangement is controllably moveable between a first configuration, in which the associated reservoir is in fluid communication with the fluid distribution conduit, so as to enable the reservoir to be charged with a pressure from the fluid distribution conduit, and a second configuration, in which the associated reservoir is in fluid communication with the respective actuation port.

2. The pneumatic circuit according to claim 1, wherein the first and second input valves are controllably moveable between a first configuration, in which the pump applies a positive pressure to the fluid distribution conduit, and a second configuration, in which the pump applies a negative pressure to the fluid distribution conduit.

3. The pneumatic circuit according to claim 1 or 2, wherein the pneumatic circuit comprises at least three flow paths extending from the fluid distribution conduit, preferably wherein the pneumatic circuit comprises at least five flow paths extending from the fluid distribution conduit, and more preferably wherein the pneumatic circuit comprises at least seven flow paths extending from the fluid distribution conduit.

4. The pneumatic circuit according to any of claims 1 to 3, wherein each valve arrangement comprises a pair of valves, wherein the first valve is a 2/2 valve having first port in fluid communication with the fluid distribution conduit and a second port in fluid communication with the associated reservoir, and wherein the second valve is a 2/2 valve having a first port in fluid communication with the associated reservoir and a second port in fluid communication with the associated actuation port.

5. The pneumatic circuit according to any of claims 1 to 3, wherein each valve arrangement comprises a single 3/2 valve having a first port in fluid communication with the fluid distribution conduit, a second port in fluid communication with the associated reservoir and a third port in fluid communication with the associated actuation port.

6. A manifold for a pneumatic drive apparatus comprising:
a fluid distribution conduit;
a plurality of actuation ports;
a plurality of reservoirs;
an inlet for providing a fluid connection between the fluid distribution conduit and a first input valve;
an outlet for providing a fluid connection between the fluid distribution conduit a second input valve; and
a plurality of flow paths, wherein each flow path extends from the fluid distribution conduit to a respective one of the plurality of actuation ports; and
wherein each flow path is associated with a respective one of the plurality of reservoirs.

7. The manifold according to claim 6, wherein the manifold comprises at least three flow paths extending from the fluid distribution conduit, preferably wherein the manifold comprises at least five flow paths extending from the fluid distribution conduit, and more preferably wherein the manifold comprises at least seven flow paths extending from the fluid distribution conduit.

8. The manifold according to claim 6 or 7, wherein each flow path extends along a tortuous path between the fluid distribution conduit and its respective actuation port.

9. The manifold according to any of claims 6 to 8, wherein the manifold comprises one or more valve ports, for connection to a valve arrangement, disposed on an external surface of the manifold.

10. The manifold according to any of claims 6 to 9, wherein each flow path comprises a plurality of sections, and wherein each of said sections comprises an associated valve port disposed on an external surface of the manifold for connection to an associated valve arrangement.

11. The manifold according to any of claims 6 to 10, wherein each reservoir is associated with a respective valve arrangement.

12. The manifold according to claim 11, wherein each valve arrangement is arranged to an opposite side of the fluid distribution conduit to its respective reservoir.

13. The manifold according to any of claims 6 to 12, wherein the manifold is configured to receive one or more valves mounted to an external surface of the manifold.

14. The manifold according to any of claims 6 to 13, wherein the manifold comprises a body, and wherein each reservoir is integrally formed within the body of the manifold.

15. The manifold according to any of claims 6 to 14, wherein the manifold is provided as a single unitary block.
